# EUROPÄISCHE PATENTSCHRIFT

(11) **EP 1 319 682 B1**
(45) Veröffentlichungstag und Bekanntmachung des Hinweises auf die Patenterteilung: **21.02.2007**
(21) Anmeldenummer: 02026798.5
(22) Anmeldetag: 02.12.2002
(51) Int. Cl.: C08J 3/14, B01J 20/32, B01J 20/28

(54) **Partikel und Verfahren zu deren Herstellung sowie deren Verwendung**
Particle, method for its preparation and use thereof
Particule, méthode pour sa préparation et son utilisation

(30) Priorität: 11.12.2001 DE 10160625
(43) Veröffentlichungstag der Anmeldung: 18.06.2003
(73) Patentinhaber: Lumos Trading & Investments Corporation, Road Town, Tortola (VG)
(72) Erfinder: Brandner, Alexander, Dr., 4663 Laakirchen (AT)
(74) Vertreter: Kador, Ulrich

(56) Entgegenhaltungen:
- EP-A- 0 534 906
- EP-A- 0 824 106
- EP-A- 0 845 495
- EP-A- 0 905 144
- WO-A-96/26220
- DE-A- 19 745 417
- DATABASE WPI Section Ch, Week 199320 Derwent Publications Ltd., London, GB; Class A96, AN 1993-163624 XP002228857 & JP 05 095999 A (ASAHI MEDICAL CO LTD), 20. April 1993 (1993-04-20)

## Beschreibung

Die Erfindung betrifft Partikel, die eine anorganische oder organische polymere Matrix umfassen, und die Herstellung solcher Partikel sowie deren Verwendung.

Es ist wünschenswert, Partikel zur Hand zu haben, die eine selektive Absorption von anionischen Molekülen oder anionischen Teilchen gewährleisten. Solche anionische Moleküle finden sich beispielsweise in Wasserkreisläufen, wie bei der Papierherstellung, wo sie teilweise unerwünscht sind.

Aus WO 96/26220 sind natürliche Cellulase Partikel bekannt die auch in Inneren kationische Gruppen aufweisen.

Der Erfindung liegt die Aufgabe zugrunde, eine Möglichkeit vorzusehen, selektiv anionische Moleküle aus Systemen zu entfernen.

Der Erfindung liegt die Erkenntnis zugrunde, dass dies durch Partikel gelingt, die eine Matrix umfassen, die im Inneren kationische Gruppen aufweist.

Gegenstand der Erfindung ist ein Partikel, umfassend eine organische polymere Matrix ausgewählt aus der Gruppe umfassend Polyamide, Polyvinylverbindungen, Polyacrylamiden, Polyacrylsäuremethylestern, Polyvinylacetat, Polyvinylbutyral, Polyvinylacetal, Polyacrylnitril und Polycarbonat, oder eine anorganische Matrix, die im Inneren des Partikels kationische Gruppen über den gesamten Querschnitt verteilt aufweist und für niedermolekulare, anionische, hydrophile Moleküle durchlässig ist.

Aufgrund der Membranstruktur können gelöste anionische Stoffe und kolloidale anionische Stoffe aufgrund des Membrancharakters der Matrix in das Innere des Partikels eindringen und werden dort durch das immobilisierte Kationisierungsmittel fixiert.

Die Matrix wirkt als selektive Membran für den Durchgang der anionischen Moleküle.

Ein Grund für die Selektivität liegt in dem hydrophilen Charakter der Matrix. Je hydrophiler das anionische Molekül ist, desto leichter kann es die membranartige Matrix durcheilen und an eine immobilisierte kationische Gruppe gebunden werden.

Die Matrix ist vorzugsweise nicht wasserlöslich.

Die Konzentration der kationischen Gruppen ist vorzugsweise über den gesamten Querschnitt gleich oder nimmt von außen nach innen im Partikel zu.

Bevorzugte Matrixmaterialien sind einerseits anorganische Verbindungen, wie Aluminiumhydroxid, Siliciumhydroxid oder deren Mischungen, Silicate und Silicagel.

Als organische polymere Matrixmaterialien werden beispielsweise Polyamide, Polyvinylverbindungen und Polyacrylamide bevorzugt.

Gegenstand der Erfindung ist auch ein Verfahren zur Herstellung der Partikel, bei dem die Matrix in einem Lösungsmittel bei Gegenwart eines gelösten Kationisierungsmittels mit einem Nichtlösungsmittel ausgefällt wird.

Vorzugsweise liegt das Kationisierungsmittel gelöst in dem Nichtlösungmittel, das als Fällungsmittel wirkt, vor.

Gegenstand der Erfindung ist ferner die Verwendung der erfindungsgemäßen Partikel für die selektive Absorption von anionischen hydrophilen Molekülen aus wässrigen Systemen, insbesondere Papiermaschinenkreisläufen.

Als anorganische Matrixmaterialien eignen sich solche, die eine membranartige Struktur zu bilden in der Lage sind. Besonders geeignet sind Aluminiumhydroxide, Siliciumhydroxide und Mischungen von beiden.

Diese anorganischen Matrizes werden als wässrige Lösungen von beispielsweise Natriumaluminat oder Natriumsilicat mit wässrigen Lösungen kationischer Polymere versetzt. Nach dem Homogenisieren wird der ph-Wert im Fall von Aluminat auf exakt 7 und bei Silicat auf 7 oder darunter eingestellt, und zwar durch Zugabe von Mineralsäure. Dadurch erfolgt die Ausfällung der Matrix mit darin eingeschlossenem Kationisierungsmittel.

Geeignete Matrixmaterialien sind auch Stärke, desaktivierte Stärke und Proteine, wie Milcheiweiß, Kollagen, Gelatine, Elastin oder Sojaprotein.

Besonders geeignet sind ferner organische Polymere. Beispiele dafür sind Polyamide, wie Polyamid 6, Polyamid 6,6, Polyamid 4,6 und andere (löslich in Ameisensäure oder Essigsäure und mit Wasser ausfällbar); Polyacrylsäuremethylester (löslich in Ameisensäure); Polyvinylacetat (löslich in Ameisensäure oder Dioxan); Polyvinylbutyral (löslich in Ameisensäure, Dioxan, DMF); Polyvinylacetal (löslich in Ameisensäure, Dioxan und Pyridin); Polyacrylnitrile (löslich in DMF); Cellulosediacetat (löslich in Ameisensäure, Essigsäure) und Polyacrylnitril. Alle diese Systeme können mit einer wässrigen Lösung, die Kationisierungsmittel enthält, gefällt werden.

Grundsätzlich können eine Vielzahl von Polymeren verwendet werden, insbesondere wenn sie folgende Anforderungen erfüllen:
- das Lösungsmittel für das Polymer muß mit Wasser mischbar sein
- Verdünnen des Lösungsmittels mit Wasser muß zur Fällung des Matrixpolymers führen
- das Polymer der Matrix muß durch den Verarbeitungsprozeß semipermeabel werden.

Weitere geeignete Matrixmaterialien sind Polycarbonate. Diese sind in halogenierten Kohlenwasserstoffen löslich. Wegen der Unmischbarkeit halogenierter Kohlenwasserstoffe mit Wasser sind wässrige Systeme mit Kationisierungsmittel hier ungeeignet. Geeignet sind aber beispielsweise kationische Emulsionspolymere, beispielsweise in einem aliphatischen Kohlenwasserstoff emulgiert. Die aliphatischen Kohlenwasserstoffe fällen Polycarbonate aus ihren Lösungen wieder aus. Polyester sind in Phenol und m-Kresol löslich und können mit aliphatischen Kohlenwasserstoffen oder Aceton ausgefällt werden.

Als Kationisierungsmittel können beispielsweise Aluminiumsalze, kationische Polyelektrolyte und bevorzugt kationische Polymere verwendet werden. Beispiele für die bevorzugten kationischen Polymere sind kationisierte Polyaminderivate, Polymere auf der Basis von Vinylamin und N-Vinylformamid, Polyacrylamide, Polyvinylamine, Polyethylenimine, Poly DADMAC. Bevorzugte handelsübliche Produkte sind: Catiofast PR 8106 von BASF; Cartafix DPR von Clariant; Poly DADMAC wie FL45C von Floerger; kationische Stärken wie Raifix, Raisio Polymin P von BASF.

Die Matrixmaterialien werden vorzugsweise zur Herstellung der Partikel mit einer Lösung des Kationisierungsmittels versetzt. Das Lösungsmittel für das Kationisierungsmittel, vorzugsweise Wasser, muß als Fällungsmittel für die Matrix in Lösung, beispielsweise Polyamid in Ameisensäure, dienen. Nach der Ausfällung des Matrixmaterials liegt das Kationisierungsmittel immobilisiert in der Matrix vor.

Die ausgefällten Partikel haben vorzugsweise eine mittlere Teilchengröße von 0,001 bis 10 mm, insbesondere 0,05 bis 1 mm, und besonders bevorzugt 0,1 bis 0,2 mm.

Zur Herstellung der erfindungsgemäßen Partikel wird vorzugsweise ein Refiner benutzt. Durch die Ausfällung der Partikel in der Scherzone des Refiners selbst gelingt es, Partikel definierter Gestalt und Größe zu erzeugen, wobei die Homogenität der Partikel außerordentlich hoch ist.

In der Scherzone des Refiners wird die Lösung der Matrix mit der Lösung des Kationisierungsmittels vermischt, wobei die Fällung der Matrix wegen des hohen Anteils an Nichtlösungsmittel, das ist die Lösung des Kationisierungsmittels, stattfindet. Die hohe Scherbelastung im Refiner führt zu äußerst feinen, faserförmigen Partikeln aus Matrix mit darin immobilisiertem Kationisierungsmittel.

Die Partikelform sowie die Membranstruktur bzw. die Porenstruktur der Partikel lassen sich durch folgende Parameter in weiten Grenzen beeinflussen:
- Drehzahl des Refiners
- Spaltbreite zwischen Stator und Rotor
- Nichtlösungsmittelüberschuss
- Temperatur
- Art des Kationisierungsmittels
- Art des Matrixmaterials

Bevorzugt wird der Refiner bei einer Rotordrehzahl von 600 bis 3600 min⁻¹ betrieben. Auf diese Weise wird eine ausreichend hohe Scherbelastung bei gleichzeitig optimaler Betriebsweise des Refiners erreicht.

Weiter bevorzugt wird der Refiner bei erhöhter Temperatur, beispielsweise 40 bis 90°C, vorzugsweise 60 bis 80°C betrieben.

Das den Refiner verlassende Gemisch aus kationisierten Partikeln, Lösungsmittel und Wasser wird in üblicher Weise im Gegenstrom mit Wasser gewaschen, um die Partikel vom Lösungsmittel zu befreien.

Vorzugsweise wird eine Vorrichtung verwendet, die einen Scheibenrefiner umfasst, wobei zur Einführung des Fällungsmittels axiale Bohrungen durch die Statorscheibe und -platte des Refiners vorgesehen sind. Zwischen der Rotor- und der Statorscheibe des Scheibenrefiners kann ein Spalt gewünschter Breite stufenlos in einfacher Weise eingestellt werden. Dadurch ist es möglich, die mittlere Länge der Partikel in gewünschter Weise gezielt zu variieren. Durch die Bohrungen in der Statorplatte des Scheibenrefiners zur Einführung des Fällungsmittels wird gewährleistet, dass der Kontakt zwischen Fällungsmittel und Matrixlösung, die über die zentrale Standard-Aufgabeöffnung des Refiners zugeführt wird, erst in dem Teil des Refiners erfolgt, in dem der Refiner eine starke Scherwirkung auf das Reaktionsgemisch ausübt. Dadurch ist sichergestellt, dass die Matrix erst in dispergierter, partikelförmiger, vorzugsweise faserartiger Form vom Fällungsmittel ausgefällt wird.

Durch dieses Verfahren ist es möglich, faserförmige Partikel mit genau definierter mittlerer Faserlänge herzustellen, ohne dass das Material eine breite Verteilung an verschiedenen Faserlängen aufweist, d.h. das so hergestellte Material besitzt hervorragende Homogenität.

Die so hergestellten Partikel können daher ohne anschließende mechanische Zerkleinerung beispielsweise in der Papierindustrie eingesetzt werden. Durch die am Refiner stufenlos einstellbare Mahlspaltbreite kann ein weites Spektrum an gewünschten mittleren Faserlängen erhalten werden.

Unter Refiner werden hier handelsübliche Maschinen zur Mahlung von Faserstoffen für die Papiererzeugung verstanden, wie sie in der Papierindustrie weit verbreitet sind. Solche Refiner dienen insbesondere zur mechanischen Zerfaserung (Fibrillierung) von Holz in Form von Hackschnitzeln zur Erzeugung von "thermomechanical pulp" (TMP), zum Mahlen von Zellstoff in wässriger Suspension, wobei die Mahlung fibrillierend oder kürzend erfolgen kann, und zur Nachmahlung von TMP oder Holzschliff, um gegebenenfalls die erforderliche Schmierigkeit des Stoffes zu erhöhen.

Refiner sind beispielsweise in L. Göttsching et al., "Papierlexikon", Deutscher Betriebswirteverlag 1999, auf Seiten 22 bis 23 oder in J.P. Casey, "Pulp and Paper", Verlag John Wiley, 1980, auf Seiten 223 bis 228 näher beschrieben. Für Refiner ist charakteristisch, dass sie mindestens einen Rotor und einen Stator umfassen, die jeweils eine Zahnung aufweisen, wobei die Zahnungen des Rotors und Stators während der Rotation nicht ineinandergreifen und die Breite des Spalts zwischen Rotor und Stator (Mahlspalt) stufenlos und in einfacher Weise einstellbar ist. Üblicherweise wird bei den Refinern zwischen Kegel- und Scheibenrefinern unterschieden, je nach der Form ihres Rotors. Da solche handelsüblichen Refiner u.a. für die Zerkleinerung von Holzhackschnitzel, d.h. für sehr starke Belastungen, ausgelegt sind., zeichnen sie sich für die Verwendung bei der vorliegenden Erfindung durch einen sehr zuverlässigen Betrieb, sehr geringen Verschleiß und hohe Betriebssicherheit aus.

Vorzugsweise wird bei dem erfindungsgemäßen Verfahren als Refiner ein Scheibenrefiner eingesetzt. Bei solchen Refinern sind Rotor und Stator jeweils als Scheibe ausgebildet, wobei auf diesen Scheiben Mahlsegmente (Mahlplatten) aus hochfestem Stahl aufgeschraubt sind, die verschiedene Profile (Refinergarnituren) aufweisen können. Scheibenrefiner weisen eine besonders hohe Durchsatzkapazität auf.

Durch den Einsatz von Scheibenrefinern ist es möglich, das erfindungsgemäße Verfahren in besonders einfacher Weise zu realisieren, wodurch ein zuverlässiger und kostengünstiger Betrieb gewährleistet wird.

Gemäß einer bevorzugten Ausführungsform der vorliegenden Erfindung wird das Fällungsmittel über axiale Bohrungen durch die Statorscheibe und -platte des Refiners in den Mahlspalt zwischen Rotor und Stator eingebracht. Dadurch wird die Matrix erst im Bereich des Refiners ausgefällt, in dem die Dispersion aus Matrixlösung und Fällungsmittel einer hohen Scherbelastung ausgesetzt ist. Damit wird zum einen gewährleistet, dass die dispergierten Matrixlösungsmitteltröpfchen beim Ausfällen in stark elongierter Form, d.h. faserförmig, vorliegen, und zum anderen wird der Bildung von Partikelagglomeraten entgegengewirkt.

Die Erfindung wird nachstehend anhand von Beispielen näher erläutert.

### Beispiel 1

Über eine Dosierpumpe wurde eine 8%ige Ameisensäurelösung von Polyamid 6 mit einem Durchsatz von 200 l/h über die zentrale Aufgabeöffnung eines Scheibenrefiners aufgebracht. Über eine weitere Dosierpumpe wurde eine wässrige Lösung von Kationisierungsmittel, nämlich 26,7 kg kationisiertes Polyamin, nämlich Cartafix DPR der Firma Clariant (20 % Trockenrückstand) auf 200 1 Wasser, die mittels eines Homogenisators gemischt wurden, in einer Menge von 226,7 l/h über Bohrungen an der Statorplatte des Refiners in den Scherspalt des Refiners eingebracht. Die Temperatur der zugeführten Komponenten betrug 70°C. Durch die Refinerarbeit erhöhte sich die Temperatur um weitere 5 bis 10°C.

Das den Refiner verlassende Gemisch aus Partikeln, Ameisensäurelösung und Wasser wurde im Gegenstrom mit Wasser gewaschen, um die Partikel von der Ameisensäure zu befreien.

Auf diese Weise konnten Partikel mit einer mittleren Teilchengröße von 0,2 mm, die sich durch sehr gute Homogenität auszeichneten, erhalten werden.

### Beispiel 2

200 g Natriumaluminat mit 18 % Gehalt an Al₂O₃ wurden mit 300 ml Wasser verdünnt. 60 g kationisiertes Polyamin, nämlich Cartafix DPR wurden zugesetzt. Dann wurde homogenisiert. Anschließend wurde unter starkem Rühren mit 21,5 g Schwefelsäure neutralisiert. Das amorphe Aluminiumhydroxid hat das kationische Polymer eingelagert. Es kann ohne weitere Reinigung als Slurry Verwendung finden. Der Aktivgehalt beträgt 8,8 Gew.%.

### Beispiel 3

18 g Polycarbonat, gelöst in 182 g Dichlormethan, wurde mit 12 g emulgiertem kationisiertem Polyacrylamid, nämlich FL45CLV, in 100 ml Testbenzin unter starkem Rühren vermischt. Dabei fiel das Polycarbonat benzin unter starkem Rühren vermischt. Dabei fiel das Polycarbonat mit den kationischen Polymeren in Form feiner Partikel aus. Nach Absaugen des Kohlenwasserstoffgemisches wurde das feuchte Produkt unter Vakuum vorsichtig von restlichem Lösungsmittel befreit. Es wurden Partikel erhalten, die sich für die Wasserbehandlung eignen.

### Beispiel 4

20 g mit Säure koaguliertem Milcheiweiß wurden in 230 g 18%iger Natronlauge gelöst. Dieser Lösung wurde unter heftigem Rühren das wässrige Kationisierungsmittel, nämlich 33 g Polydadmac als 20%ige wässrige Lösung, zugegeben. Das Gemisch wurde unter maximaler Scherbelastung in einem Ultraturax mit 90g 65%iger Schwefelsäure versetzt. Die dabei erhaltenen koagulierten Partikel hatten das Kationisierungsmittel im Inneren fixiert. Gearbeitet wurde bei Raumtemperatur. Während der Koagulation erhöht sich die Temperatur um über 30°C. Schließlich wurde die Slurry aus kationischem Protein mit 40g 5%iger Formalinlösung gehärtet und gewaschen.

Die erfindungsgemäßen Partikel eignen sich insbesondere zur selektiven Absorption von anionischen Partikeln aus Wasserkreisläufen, insbesondere geschlossenen Wasserkreisläufen, wie sie in der Papierindustrie anzutreffen sind. Auch für den Einsatz in Abwässern sind die erfindungsgemäßen Partikel geeignet.

## Patentansprüche

1. Partikel, umfassend eine organische polymere Matrix, ausgewählt aus der Gruppe umfassend Polyamide, Polyvinylverbindungen, Polyacrylamiden, Polyacrylsäuremethylestern, Polyvinylacetat, Polyvinylbutyral, Polyvinylacetal, Polyacrylnitril und Polycarbonat, oder eine anorganische Matrix, die im Inneren des Partikels kationische Gruppen über den gesamten Querschnitt verteilt aufweist und für niedermolekulare, anionische, hydrophile Moleküle durchlässig ist.

2. Partikel nach Anspruch 1, **dadurch gekennzeichnet, dass** die Matrix als selektive Membran für den Durchgang anionischer Moleküle wirkt.

3. Partikel nach Anspruch 1 oder 2, **dadurch gekennzeichnet, dass** die Matrix durch ihren hydrophilen Charakter selektiv für anionische Moleküle durchlässig ist.

4. Partikel nach einem der vorstehenden Ansprüche, **dadurch gekennzeichnet, dass** die Matrix nicht wasserlöslich ist.

5. Partikel nach einem der vorstehenden Ansprüche, **dadurch gekennzeichnet, dass** die Konzentration der kationischen Gruppen von außen nach innen gleich ist oder zunimmt.

6. Partikel nach einem der vorstehenden Ansprüche, **dadurch gekennzeichnet, dass** die Matrix aus Aluminiumhydroxid oder Siliciumhydroxid oder deren Mischungen besteht.

7. Partikel nach einem der vorstehenden Ansprüche, **dadurch gekennzeichnet, dass** die Partikel eine mittlere Teilchengröße von 0,001 bis 10 mm, insbesondere 0,05 bis 1 mm, aufweisen.

8. Verfahren zur Herstellung von Partikeln umfassend eine polymere Matrix gelöstem Kationisierungsmittel, die im Inneren kationische Gruppen aufweist, **dadurch gekennzeichnet, dass** die Matrix in einem Lösungsmittel bei Gegenwart eines gelösten Kationisierungsmittels mit einem Nichtlösungsmittel ausgefällt wird.

9. Verfahren nach Anspruch 8, **dadurch gekennzeichnet, dass** das Kationisierungsmittel gelöst in dem Nichtlösungsmittel vorliegt.

10. Verfahren nach Anspruch 8 der 9, **dadurch gekennzeichnet, dass** die Mischung aus Matrixlösung und gelöstem Kationisierungsmittel in einem Refiner durch Zugabe eines Nichtlösungsmittels für das Matrixpolymer erfolgt.

11. Verwendung der Partikel nach einem der Ansprüche 1 bis 7 zur selektiven Absorption von anionischen, hydrophilen Molekülen aus wässrigen Systemen.

12. Verwendung der Partikel nach einem der Ansprüche 1 bis 7 zur selektiven Absorption von anionischen, hydrophilen Molekülen aus Papiermaschinenkreisläufen.

## Claims

1. Particles comprising an organic polymer matrix selected from the group comprising polyamides, polyvinyl compounds, polyacrylamides, polyacrylic acid methyl esters, polyvinyl acetate, polyvinyl butyral, polyvinyl acetal, polyacrylonitrile and polycarbonate, or an inorganic matrix, which has cationic groups distributed over the whole cross-section inside the particle and is permeable for low-molecular, anionic, hydrophilic molecules.

2. Particles according to claim 1, **characterized in that** the matrix acts as selective membrane for the passage of anionic molecules.

3. Particles according to claim 1 or 2, **characterized in that** the matrix is permeable selectively for anionic molecules due to its hydrophilic character.

4. Particles according to one of the previous claims, **characterized in that** the matrix is not water-soluble.

5. Particles according to one of the previous claims, **characterized in that** the concentration of the cationic groups is the same or increases from the outside to the inside.

6. Particles according to one of the previous claims, **characterized in that** the matrix is composed of aluminium hydroxide or silicon hydroxide or their mixtures.

7. Particles according to one of the previous claims, **characterized in that** the particles have a average particle size of 0.001 to 10 mm, in particular 0.05 to 1 mm.

8. Process for the preparation of particles comprising a polymer matrix selected from the group comprising polyamides, polyvinyl compounds, polyacrylamides, polyacrylic acid methyl esters, polyvinyl acetate, polyvinyl butyral, polyvinyl acetal, polyacrylonitrile and polycarbonate, or an inorganic matrix, which has cationic groups inside, **characterized in that** the matrix is precipitated with a non-solvent in a solvent in the presence of a dissolved cationization agent.

9. Process according to claim 8, **characterized in that** the cationization agent is present dissolved in the non-solvent.

10. Process according to claim 8 or 9, **characterized in that** the mixing of matrix solution and dissolved cationization agent takes place in a refiner by the addition of a non-solvent for the matrix polymer.

11. Use of the particles according to one of claims 1 to 7 for the selective absorption of anionic, hydrophilic molecules from aqueous systems.

12. Use of the particles according to one of claims 1 to 7 for the selective absorption of anionic, hydrophilic molecules from paper machine cycles.

## Revendications

1. Particules, comprenant une matrice polymère organique, choisie dans le groupe constitué par les polyamides, les composés polyvinyliques, les polyacrylamides, les esters méthyliques de l'acide polyacrylique, le poly(acétate de vinyle), le poly(butyral de vinyle), le poly(acétal de vinyle), le polyacrylonitrile et le polycarbonate, ou une matrice inorganique qui présente, à l'intérieur de la particule, des groupes cationiques répartis sur toute la section transversale et qui est perméable pour des molécules hydrophiles anioniques de faible masse moléculaire.

2. Particules selon la revendication 1, **caractérisées en ce que** la matrice agit en tant que membrane sélective pour le passage de molécules anioniques.

3. Particules selon la revendication 1 ou 2, **caractérisées en ce que** la matrice est perméable de manière sélective pour des molécules anioniques en raison de son caractère hydrophile.

4. Particules selon l'une quelconque des revendications précédentes, **caractérisées en ce que** la matrice n'est pas hydrosoluble.

5. Particules selon l'une quelconque des revendications précédentes, **caractérisées en ce que** la concentration des groupes cationiques de l'extérieur à l'intérieur est constante ou croissante.

6. Particules selon l'une quelconque des revendications précédentes, **caractérisées en ce que** la matrice est composée d'hydroxyde d'aluminium ou d'hydroxyde de silicium ou de leurs mélanges.

7. Particules selon l'une quelconque des revendications précédentes, **caractérisées en ce que** les particules présentent une taille moyenne de particules de 0,001 à 10 mm, en particulier de 0,05 à 1 mm.

8. Procédé de préparation de particules comprenant une matrice polymère, choisie dans le groupe constitué par les polyamides, les composés polyvinyliques, les polyacrylamides, les esters méthyliques de l'acide polyacrylique, le poly(acétate de vinyle), le poly(butyral de vinyle), le poly(acétal de vinyle), le polyacrylonitrile et le polycarbonate, ou une matrice inorganique qui, à l'intérieur, présente des groupes cationiques, **caractérisé en ce que** la matrice est précipitée dans un solvant avec un non-solvant en présence d'un agent de cationisation dissous.

9. Procédé selon la revendication 8, **caractérisé en ce que** l'agent de cationisation est présent dans le non-solvant sous forme dissoute.

10. Procédé selon la revendication 8 ou 9, **caractérisé en ce que** le mélange de la solution de matrice et de l'agent de cationisation dissous est réalisé dans un raffineur en ajoutant un non-solvant pour le polymère de la matrice.

11. Utilisation des particules selon l'une quelconque des revendications 1 à 7 pour l'absorption sélective de molécules hydrophiles anioniques dans des systèmes aqueux.

12. Utilisation des particules selon l'une quelconque des revendications 1 à 7 pour l'absorption sélective de molécules hydrophiles anioniques dans des circuits de machines à papier.
